# EUROPÄISCHE PATENTSCHRIFT

(11) **EP 3 345 623 B1**
(45) Veröffentlichungstag und Bekanntmachung des Hinweises auf die Patenterteilung: **16.12.2020**
(21) Anmeldenummer: 17150427.7
(22) Anmeldetag: 05.01.2017
(51) Int. Cl.: A61K 45/06, A23L 33/105

(54) **NAHRUNGSERGÄNZUNGSMITTELPRÄPARAT**
FOOD SUPPLEMENT PREPARATION
PRÉPARATION DE COMPLÉMENT ALIMENTAIRE

(43) Veröffentlichungstag der Anmeldung: 11.07.2018
(73) Patentinhaber: PM-International AG, 5445 Schengen (LU)
(72) Erfinder: Sorg, Rolf, L-5444 Schengen (LU); Kühne, Tobias, 54497 Morbach (DE); Messer, Wilhelm, 54451 Irsch (DE); Lauinger, Christian, 76275 Ettlingen (DE)
(74) Vertreter: Zech, Stefan Markus

(56) Entgegenhaltungen:
- DATABASE GNPD [Online] MINTEL; Juni 2006 (2006-06), Anonymous: "15 Day Program", XP002771227, Database accession no. 550779
- DATABASE GNPD [Online] MINTEL; Juli 2016 (2016-07), Anonymous: "159 Super Diet Support Supplement", XP002771228, Database accession no. 4138269
- DATABASE GNPD [Online] MINTEL; Juli 2016 (2016-07), Anonymous: "Organic Intensive Detox Dietary Supplement from Vegetable Extracts with Vitamin C", XP002771229, Database accession no. 4145611
- DATABASE GNPD [Online] MINTEL; Oktober 2013 (2013-10), Anonymous: "Dietary Supplement", XP002771230, Database accession no. 2191372
- DATABASE GNPD [Online] MINTEL; Februar 2009 (2009-02), Anonymous: "Dietary Supplement", XP002771231, Database accession no. 1037352
- DATABASE GNPD [Online] MINTEL; März 2012 (2012-03), Anonymous: "Quick Fix Exotic Goji Berry Gel", XP002771232, Database accession no. 1746511
- DATABASE GNPD [Online] MINTEL; Mai 2016 (2016-05), Anonymous: "Slimming Dietary Supplement", XP002771233, Database accession no. 4009161
- Email Korrespondenz mit Lila Wilzer, Mintel Group
- reciept for day of purchase of product D3
- reciept for day of purchase of product D7
- Anonymous: "Mehr sauer als lustig? - Den Body entgiften mit Intensiv-Programmen", , 28 September 2014 (2014-09-28), pages 1-9, XP055659038, Retrieved from the Internet: URL:https://www.everyday-feng-shui.de/mehr -sauer-als-lustig-den-body-entgiften-mit-i ntensiv-programmen/ [retrieved on 2020-01-17]
- Anonymous: "Date of publication", , 28 September 2014 (2014-09-28), Retrieved from the Internet: URL:https://www.google.de/search?q=everyda y+feng+shui+mehr+sauer+als+lustig&source=l nt&tbs=cdr%3A1%2Ccd_min%3A%2Ccd_max%3A01.0 5.2017&tbm= [retrieved on 2020-01-17]
- SOBOLEWSKA DANUTA ET AL: "Allium ursinum: botanical, phytochemical and pharmacological overview", PHYTOCHEMISTRY REVIEWS, KLUWER, NL, vol. 14, no. 1, 25 December 2013 (2013-12-25), pages 81-97, XP035464258, ISSN: 1568-7767, DOI: 10.1007/S11101-013-9334-0 [retrieved on 2013-12-25]

## Beschreibung

Die Erfindung betrifft ein Nahrungsergänzungsmittelpräparat, das insbesondere pulverförmig und/oder als Konzentrat vorliegt.

Der Einsatz von Nahrungsergänzungsmittelpräparaten, beispielsweise im Sport oder zur Förderung der Gesundheit ist bereits bekannt. Nahrungsergänzungsmittelpräparate sind dazu bestimmt, die allgemeine Ernährung, bestehend beispielsweise aus kohlenhydrat- oder eiweißhaltigen Lebensmitteln, wie Nudeln, Fleisch oder dergleichen, oder auch Süßwaren wie Kuchen oder Kekse zu ergänzen. Im Gegensatz zu konventionellen Lebensmitteln und Getränken stellen Nahrungsergänzungsmittelpräparate üblicherweise ein Konzentrat von Nahrungsergänzungsstoffen oder sonstigen Stoffen mit ernährungsspezifischer physiologischer Wirkung dar. Sie werden gewöhnlich in dosierter Form, insbesondere in Form von Kapseln, Pastillen, Tabletten, Pillen, Brausetabletten, Pulverbeuteln, Flüssigampullen, Flaschen mit Tropfeinsätzen und ähnlichen Darreichungsformen von Flüssigkeiten und Pulvern zur Aufnahme in abgemessenen kleinen Mengen vertrieben.

Das vorbekannte Produkt 159 Super Diet Support Supplement der Firma Asahi Food & Healthcare ist ein Nahrungsergänzungsmittel zur Unterstützung der täglichen Ernährung und Schönheit. Es enthält unter Anderem Curcumin, Knoblauch, Chlorella und Ingwerextrakt.

Das vorbekannte Produkt Quick Fix Exotic Goji Berry Gel der Sta Nutrition Labs ist ein Nahrungsergänzungsmittel unter Anderem zur Entgiftung. Das Nahrungsergänzungsmittel enthält unter Anderem Knoblauch, Chlorella, Ingwer und Piperin.

Es ist Aufgabe der Erfindung ein Nahrungsergänzungsmittelpräparat vorzuschlagen, das eine effektive und schonende Entgiftung des (menschlichen) Körpers ermöglichen soll.

Diese Aufgabe wird gemäß einem ersten Aspekt durch ein Nahrungsergänzungsmittelpräparat gelöst, das insbesondere pulverförmig und/oder als Konzentrat vorliegt, wobei das Nahrungsergänzungsmittelpräparat umfasst:
- eine Bioverfügbarkeitskomponente zur Erhöhung der Bioverfügbarkeit von Nahrungsergänzungsstoffen oder sonstigen Stoffen mit ernährungsspezifischer physiologischer Wirkung in dem Nahrungsergänzungsmittelpräparat und
- eine Chelatbildungskomponente zur Unterstützung der Chelatbildung im (menschlichen) Körper, wobei die Bioverfügbarkeitskomponente einen Extrakt aus schwarzem Pfeffer, insbesondere Bioperin, und eine Ingwer-Komponente umfasst, wobei die Chelatbildungskomponente eine Algenkomponente, nämlich eine Spirulina-Komponente und eine Chlorella-Komponente, eine Curcuma-Komponente und eine Bärlauch-Komponente umfasst.

Durch die Kombination der (bzw. einen Komplex mit der) Bioverfügbarkeitskomponente und der Chelatbildungskomponente wird auf effektive Art und Weise eine schonende Entgiftung des (menschlichen) Körpers ermöglicht. Insbesondere wurde erfindungsgemäß erkannt, dass die Chelatbildungskomponente Toxine (wie Schwermetalle, Pestizide und/oder aus Medikamenten) aus dem Körper entfernt (bzw. zu einer derartigen Entfernung beiträgt). Dabei ermöglicht die Bioverfügbarkeitskomponente eine effektive Aufnahme von die Entgiftung unterstützenden Nahrungsergänzungsstoffen oder sonstigen Stoffen mit ernährungsspezifischer physiologischer Wirkung in dem Nahrungsergänzungsmittelpräparat (z.B. Vitamine, wie B-Vitamine und/oder Vitamin A und/oder Vitamin C und/oder Vitamin D und/oder Vitamin E sowie Mineralstoffe und/oder Spurenelemente).

Die Bioverfügbarkeitskomponente umfasst einen Extrakt aus schwarzem Pfeffer, insbesondere Bioperin. Bioperin enthält Piperin, ein Piperidin-Alkaloid, das aus schwarzem Pfeffer isoliert wird. Zusätzlich umfasst die Bioverfügbarkeitskomponente eine Ingwerkomponente. Im Allgemeinen erhöht die Ingwerkomponente bzw. die Pfefferkomponente, insbesondere Piperin aus schwarzem Pfefferextrakt die Aufnahme der Nahrungsergänzungsstoffe oder sonstigen Stoffe mit ernährungsspezifischer physiologischer Wirkung in dem Nahrungsergänzungsmittelpräparat.

Die Chelatbildungskomponente umfasst eine Algenkomponente, eine Spirulina-Komponente und eine Chlorella-Komponente, und eine Curcuma-Komponente und eine Bärlauch-Komponente.

Unter Bioverfügbarkeit soll insbesondere eine pharmakologische Messkurve für den Anteil der Nahrungsergänzungsstoffe oder sonstiger Stoffe mit ernährungsspezifischer physiologischer Wirkung in dem Nahrungsergänzungsmittelpräparat verstanden werden, der unverändert im systemischen Kreislauf (insbesondere Blutkreislauf) zur Verfügung steht. Sie soll angeben, wie schnell und in welchem Umfang der Nahrungsergänzungsstoff oder sonstige Stoff mit ernährungsspezifischer physiologischer Wirkung aufgenommen (resorbiert) wird und am Wirkort (der menschlichen Zelle) zur Verfügung steht.

Unter einer Chelatbildungskomponente ist eine Komponente zu verstehen, die im (menschlichen) Körper die Bildung von Chelaten (insbesondere mit Schwermetallen, vorzugsweise (Methyl-) Quecksilber und/oder Arsen und/oder Blei und/oder Kadmium und/oder Kobalt und/oder Chrom und/oder Uran) ermöglicht oder diese Chelatbildung zumindest unterstützt. Der entsprechende Prozess der Chelatbildung ist eine Biosorption und insbesondere ein physikochemischer Prozess, bei dem Kontaminanten (Schwermetalle und andere Schadstoffe) durch Biomasse komplexiert werden, so dass Chelate gebildet werden. Anschließend kann eine (einfache) Ausleitung der Kontaminanten insbesondere über den Urin erfolgen.

Besonders bevorzugt ist in dem Nahrungsergänzungsmittelpräparat ein Komplex mit Schwarzpfefferextrakt (Piperin, insbesondere Bioperin) und Ingwer sowie eine Kombination von Chlorella und Spirulina sowie Curcumin enthalten.

Das Algenpulver, insbesondere die Spirulina-Komponente bzw. die Chlorella-Komponente kann zu einer effektiven Chelatbildung mit Schwermetallen, insbesondere Methyl-Quecksilber und/oder Arsen und/oder Blei und/oder Kadmium und/oder Kobalt und/oder Chrom und/oder Uran (etc.) führen. Insbesondere eine Kombination von Spirulina und Chlorella trägt effektiv zu einer Chelatbildung bei.

Vorzugsweise umfasst das Nahrungsergänzungsmittelpräparat eine Gastrointestinaltraktkomponente zur Unterstützung der Ausscheidung von Abbaustoffen über den Stuhl, und/oder eine Nierenkomponente zur Unterstützung der Entfernung von insbesondere wasserlöslichen Abbaustoffen, insbesondere Toxinen, in der Niere, und/oder eine Leberkomponente zur Unterstützung der Metabolisierung von insbesondere fettlöslichen Toxinen in der Leber. Besonders wirksam ist eine Kombination von Bioverfügbarkeitskomponente, Chelatbildungskomponente und Leberkomponente (ggf. mit weiteren Bestandteilen).

Vorzugsweise umfasst die Gastrointestinaltraktkomponente eine Curcuma-Komponente und/oder eine Brokkoli-Komponente und/oder eine Artischocke-Komponente.

Die Nierenkomponente umfasst eine Brennnessel-Komponente

Die Leberkomponente weist vorzugsweise eine Silibinin-Komponente, vorzugsweise eine Silymarin-Komponente, insbesondere eine Silber-Mariendistel-Komponente, und/oder eine Artischocke-Komponente und/oder eine Cholin-Komponente auf.

Die Curcuma-Komponente kann durch einen Curcumin-Cyclodextrin-Komplex bereitgestellt werden oder einen solchen umfassen. Insbesondere kann "CAVAMAX W8 Curcumin" der Wacker Chemie AG (Zusammensetzung gemäß 30. Dezember 2016) zum Einsatz kommen. Bei einer derartigen Ausbildung der Curcuma-Komponente kann diese besonders effektiv aufgenommen werden und somit effektiv die Ausscheidung von (für den Körper schädlichen) Abbaustoffen unterstützen (sowie ihre bioverfügbarkeitserhöhende Wirkung einbringen).

Die Curcuma-Komponente kann insbesondere zu einer schützenden Wirkung in Bezug auf quecksilber-induzierte oxidative Stressparameter führen, insbesondere eine positive Wirkung in Bezug auf Lipidperoxidation und/oder ein Glutathion-Level und/oder eine Superoxiddismutase und/oder eine Glutathionperoxidase und/oder Katalyse-Aktivitäten in Leber und/oder Niere und/oder Gehirn aufweisen. Die Curcuma-Komponente kann auch effektiv für eine Umkehrung von Quecksilber-induzierten (serum-)biochemischen Veränderungen führen, die Leber- bzw. Nierenschäden anzeigen. Grundsätzlich kann die Quecksilberkonzentration im Gewebe durch die Curcuma-Komponente reduziert werden.

Brokkoli enthält zahlreiche sekundäre Pflanzenstoffe, u.a. Flavonoide (Antioxidantien) und Glucosinolate (insbesondere Senfölglycoside). Senfölglycoside (z.B. Glucoraphanin) speichern Senföle wie z.B. Sulforaphan (ein vergleichsweise starkes indirektes Antioxidans). Sulforaphan wirkt nicht selbst als direktes Antioxidans, das freie Radikale abfängt, sondern vielmehr als Aktivator für Phase-II-Enzyme, die die körpereigenen Abwehrmechanismen in Gang setzen.

Die Artischocken-Komponente hat eine appetitanregende, verdauungsfördernde und cholesterinsenkende Wirkung. Aufgrund verschiedener Wirkmechanismen (vermehrte Ausscheidung von Cholesterin, erhöhter Cholesterinverbrauch zur Gallensäuresynthese und Hemmung der Neubildung von Cholesterin in den Leberzellen) kann durch die Artischocken-Komponente eine Senkung des Gesamtcholesterins im erheblichen Umfang möglich sein. Der enthaltene Bitterstoff Cynarin regt den Stoffwechsel von Leber und Galle an. Weiterhin enthält Artischocke den Stoffkomplex Silymarin mit dem Wirkstoff Silibinin. Artischocke enthält den Stoffkomplex Silymarin mit dem Wirkstoff Silibinin mit den weiter unten im Zusammenhang mit der (Silber-)Mariendistel genannten Vorteilen.

Die Ingwer-Komponente hat antioxidative, antiemetische, entzündungshemmende sowie anregende Effekte auf die Magensaft-, Speichel- und Gallebildung sowie die Darmfunktion. Ingwer hat eine hepatoprotektive Wirkung und kann effektiv eine (beispielsweise Blei-induzierte) Abnahme des Lebergewichts umkehren. Im Allgemeinen hat Ingwer eine positive Wirkung auf den Zustand der Leber und deren Aktivität.

Die Brennnessel-Komponente unterstützt den menschlichen Körper bei Problemen mit den Harnwegen, der Blase und den Nieren, wie beispielsweise bei Harnwegsinfekten, Blasenentzündungen, Reizblase, Blasensteinen (etc.). Die Brennnessel kann hierbei dafür sorgen, dass die Harnwege durchgespült werden. Auf diese Weise können sich weder Krankheitserreger festsetzen noch Blasen-/Nierensteine bilden. Weiterhin bessert die Brennnessel (insbesondere in Form von Brennnesselwurzelextrakt) Prostatabeschwerden, die sich infolge einer (gutartigen) Prostatavergrößerung entwickeln können. Die Brennnessel wirkt darüber hinaus (aufgrund ihrer entzündungshemmenden Eigenschaften) bei chronisch entzündlichen Darmerkrankungen. Die Brennnessel-Komponente (insbesondere Brennnesselblätter) kann bei Arthritis wirken (und zwar nicht nur entzündungshemmend, sondern auch schmerzlindernd, so dass, beispielsweise in der Rheuma-Therapie weniger Schmerzmittel benötigt werden).

Bärlauch zeichnet sich durch eine antibakterielle Wirkung (z.B. gegen Gärungsdyspepsien) sowie als Karminativum aus. Weiterhin kann Bärlauch als Antihypertonikum und Antiarteriosklerotikum wirken. Weiterhin wirken die im Bärlauch enthaltenen, überwiegend schwefelartigen ätherischen Öle positiv auf Verdauung, Atemwege, Leber, Galle, Darm und Magen. Des Weiteren ergibt sich eine effektive Heilwirkung bei Arteriosklerose, Bluthochdruck und Darmerkrankungen. Bärlauch enthält Schwefelbestandteile, wie z.B. Allicin, die einen positiven Einfluss auf die Leber und auf die Niere haben können. Zudem wirkt Bärlauch stoffwechselanregend und wirkt sich positiv auf den Cholesterinspiegel aus. Die Bärlauch-Komponente kann (beispielsweise As₂O₃-induzierte) Leberschädigungen verhindern (oder zumindest reduzieren).

Silber-Mariendistel, insbesondere deren Wirkstoff Silymarin kann leberschützend (hepatoprotektiv), leberstärkend und entgiftend wirken sowie den Gallenfluss und die Zirkulation anregen. Lebervergiftungen sowie Hirnödeme können mit Silibinin (das insbesondere aus den Früchten der Silber-Mariendistel gewonnen wird) behandelt werden. Silymarin kann die Struktur der äußeren Zellmembran der Hepatozyten derart verändern, dass Lebergifte nicht in das Zellinnere eindringen können. Sie können als Radikalfänger stabilisierend wirken und die Hepatozyten schützen, indem die Membranlipid-Oxidation verhindert wird. Weiterhin kann Silychristin (Silymarin II) die Peroxidase und Lipogenase hemmen. Silymarin kann die Aktivität der nukleolären Polymerase A stimulieren, so dass es zur gesteigerten ribosomalen Proteinsynthese kommen kann. Dadurch kann die Regeneration der Leber erhöht werden. Im Allgemeinen hat Silymarin einen positiven Einfluss auf den Zustand der Leber und kann die Leistung der Leber (insbesondere durch die Stimulation der Zellenregeneration und des Einfangens von freien Radikalen) fördern.

Cholin kann als lipotroper Faktor wirken und die Einlagerung von Fett in die Leber verhindern. Weiterhin kann Cholin zu einem normalen Lipidstoffwechsel und einer normalen Leberfunktion und einem normalen Stoffwechsel des Homocysteins beitragen.

Das Nahrungsergänzungsmittelpräparat umfasst vorzugsweise weiterhin eine Zink-Komponente und/oder eine Chrom-Komponente und/oder eine Molybdän-Komponente und/oder eine Selen-Komponente.

Selen kann zu einer normalen Funktion des Immunsystems beitragen und außerdem die Zellen vor oxidativem Stress schützen.

Zink kann zu einem normalen Säure-Basen-Stoffwechsel beitragen, zu einem normalen Fettsäurestoffwechsel beitragen, zu einer normalen Funktion des Immunsystems beitragen und dazu beitragen, die Zellen vor oxidativem Stress zu schützen.

Chrom kann zu einem normalen Stoffwechsel von Makronährstoffen beitragen.

Molybdän kann zu einer normalen Verstoffwechselung schwefelhaltiger Aminosäuren beitragen.

In dem (insbesondere pulverförmigen) Nahrungsergänzungsmittelpräparat können (pro 100 g) 25 mg - 100 mg Zink und/oder 100 µg - 400 µg Chrom und/oder 100 µg - 400 µg Molybdän und/oder 150 µg - 500 µg Selen und/oder 700 mg - 1500 mg Cholin enthalten sein.

In einem, insbesondere pulverförmigen, Nahrungsmittelergänzungspräparat gemäß der Erfindung können enthalten sein:
- Reiskleie und/oder
- Guargummi und/oder
- Brennnesselextrakt (ggf. mit Maltodextrin) und/oder
- Brokkoli-Pulver und/oder
- Cholin (-Bitartrat) und/oder
- (schwarzer) Pfefferextrakt und/oder
- Artischockenpulver (ggf. mit Maltodextrin) und/oder
- Silberdistelextrakt (ggf. mit Maltodextrin) und/oder
- Zitronensäure und/oder
- Algenpulver (spirulina platensis, chlorella) und/oder
- Bärlauchpulver (Bärlauchblattpulver) und/oder
- Zinkgluconat und/oder
- Curcuma-Extrakt (mit γ-Cyclodextrin) und/oder
- Steviol Glycosid und/oder
- Selen-angereicherte Hefe und/oder
- Apfelfaser und/oder
- Ingwer-Extraktpulver und/oder
- Chrom-Picolinat und/oder
- Sodiummolybdat (*2H₂O).

Weitere Ausführungsformen ergeben sich aus den Unteransprüchen.

Nachfolgend wird ein Ausführungsbeispiel der Erfindung erläutert:
Das Ausführungsbeispiel umfasst:
- Brennnesselextrakt
- Brokkoli-Pulver
- Cholin
- Artischocke
- Mariendistel
- Bärlauch
- Algenpulver (umfassend Chlorella und Spirulina)
- Ingwer
- Curcuma (y-CD Curcumin)
- (schwarzer) Pfefferextrakt (Bioperin)
- Selen
- Zink
- Chrom
- Molybdän.

Vorzugsweise sind Reiskleie, Guargummi, Brennnesselextrakt (ggf. mit Maltodextrin), Brokkoli-Pulver, Cholin (-Bitartrat), (schwarzer) Pfefferextrakt, Artischockenpulver (ggf. mit Maltodextrin), Silberdistelextrakt (ggf. mit Maltodextrin), Zitronensäure, Algenpulver (spirulina platensis, chlorella), Bärlauchpulver (Bärlauchblattpulver), Zinkgluconat, Curcuma-Extrakt (mit γ-Cyclodextrin), Steviol Glycosid, Selen-angereicherte Hefe, Apfelfaser Ingwer-Extraktpulver, Chrom-Picolinat und Sodiummolybdat (*2H₂O) enthalten.

Das Nahrungsmittelpräparat kann in einzelnen Beuteln (Sachets) abgepackt sein, die eine Tagesration umfassen können. Beispielsweise können 3 - 15 g, vorzugsweise (zumindest ungefähr) 7 g des Nahrungsmittelpräparats in einem Beutel abgepackt sein. Der Inhalt des Beutels kann dann in stillem Wasser (z.B. 100 - 200 ml, vorzugsweise zumindest ungefähr 150 ml) aufgelöst werden.

Weiterhin können in dem Ausführungsbeispiel Nahrungsergänzungsstoffe oder sonstige Stoffe mit ernährungsspezifischer physiologischer Wirkung in dem Nahrungsergänzungsmittelpräparat vorgesehen sein wie Vitamin A, B-Vitamine, Vitamin C, Vitamin D, Vitamin E und/oder Mineralstoffe bzw. Spurenelemente.

## Patentansprüche

1. Nahrungsergänzungsmittelpräparat, das insbesondere pulverförmig und/oder als Konzentrat vorliegt, umfassend:
- eine Bioverfügbarkeitskomponente zur Erhöhung der Bioverfügbarkeit von Nahrungsergänzungsstoffen oder sonstigen Stoffen mit ernährungsspezifischer physiologischer Wirkung in dem Nahrungsergänzungsmittelpräparat und
- eine Chelatbildungskomponente zur Unterstützung der Chelatbildung im Körper, **dadurch gekennzeichnet, dass** die Bioverfügbarkeitskomponente einen Extrakt aus schwarzem Pfeffer, insbesondere Bioperin, und eine Ingwer-Komponente umfasst, wobei die Chelatbildungskomponente eine Spirulina-Komponente und eine Chlorella-Komponente, eine Curcuma-Komponente und eine Bärlauch-Komponente umfasst.

2. Nahrungsergänzungsmittelpräparat nach Anspruch 1,
**gekennzeichnet durch**:
- eine Gastrointestinaltraktkomponente zur Unterstützung der Ausscheidung von Abbaustoffen über den Stuhl, und/oder
- eine Nierenkomponente zur Unterstützung der Entfernung von insbesondere wasserlöslichen Abbaustoffen, insbesondere Toxinen, in der Niere, und/oder
- eine Leberkomponente zur Unterstützung der Metabolisierung von insbesondere fettlöslichen Toxinen in der Leber.

3. Nahrungsergänzungsmittelpräparat nach Anspruch 2,
**dadurch gekennzeichnet, dass**
die Gastrointestinaltraktkomponente eine Broccoli-Komponente und/oder eine Artischocke-Komponente umfasst.

4. Nahrungsergänzungsmittelpräparat nach einem der Ansprüche 2 oder 3, **dadurch gekennzeichnet, dass**
die Nierenkomponente eine Brennnessel-Komponente umfasst.

5. Nahrungsergänzungsmittelpräparat nach einem der Ansprüche 2 bis 4, **dadurch gekennzeichnet, dass**
die Leberkomponente eine Silibinin-Komponente, vorzugsweise eine Silymarin-Komponente, insbesondere eine Silber-Mariendistel-Komponente, und/oder eine Artischocke-Komponente und/oder eine Cholin-Komponente umfasst.

6. Nahrungsergänzungsmittelpräparat nach einem der vorhergehenden Ansprüche,
**gekennzeichnet durch:**
eine Zink-Komponente und/oder eine Chrom-Komponenten und/oder eine Molybdän-Komponente und/oder eine Selen-Komponente.

7. Nahrungsergänzungsmittelpräparat nach einem der vorhergehenden Ansprüche,
**gekennzeichnet durch**:
- Reiskleie und/oder
- Guargummi und/oder
- Brennnesselextrakt (ggf. mit Maltodextrin), und/oder
- Brokkoli-Pulver und/oder
- Cholin (-Bitartrat) und/oder
- Artischockenpulver (ggf. mit Maltodextrin) und/oder
- Silberdistelextrakt (ggf. mit Maltodextrin) und/oder
- Zitronensäure und/oder
- Algenpulver (spirulina platensis, chlorella) und/oder
- Bärlauchpulver (Bärlauchblattpulver) und/oder
- Zinkgluconat und/oder
- Curcuma-Extrakt (mit γ-Cyclodextrin) und/oder
- Steviol Glycosid und/oder
- Selen-angereicherte Hefe und/oder
- Apfelfaser und/oder
- Ingwer-Extraktpulver und/oder
- Chrom-Picolinat und/oder
- Sodiummolybdat (*2H₂O).

## Claims

1. A food supplement preparation, in particular present in powder form and/or as a concentrate, comprising:
- a bioavailability component for increasing the bioavailability of food supplement substances and other substances having a nutrition-specific physiological action in the food supplement preparation, and
- a chelating component for supporting the chelate formation in the body, **characterized in that**
the bioavailability component comprises an extract of black pepper, in particular bioperine, and a ginger component, wherein the chelating component comprises a spirulina component and a chlorella component, a curcuma component and a wild garlic component.

2. The food supplement preparation according to claim 1,
**characterized by**
- a gastrointestinal tract component for supporting the elimination of degradation substances via the feces, and/or
- a kidney component for supporting the removal of in particular water-soluble degradation substances, in particular toxins, in the kidney, and/or
- a liver component for supporting the metabolization of in particular fat-soluble toxins in the liver.

3. The food supplement preparation according to claim 2,
**characterized in that**
the gastrointestinal tract component comprises a broccoli component and/or an artichoke component.

4. The food supplement preparation according to any one of claims 2 or 3,
**characterized in that**
the kidney component comprises a stinging nettle component.

5. The food supplement preparation according to any one of claims 2 to 4,
**characterized in that**
the liver component comprises a silibinin component, preferably a silymarin component, in particular a silver milk thistle component, and/or an artichoke component and/or a choline component.

6. The food supplement preparation according to any one of the preceding claims,
**characterized by**
a zinc component and/or a chromium component and/or a molybdenum component and/or a selenium component.

7. The food supplement preparation according to any one of the preceding claims, **characterized by**:
- rice bran and/or
- guar gum and/or
- stinging nettle extract (where appropriate, with maltodextrin), and/or
- broccoli powder and/or
- choline (bitartrate) and/or
- artichoke powder (where appropriate, with maltodextrin) and/or
- carline thistle extract (where appropriate, with maltodextrin) and/or
- citric acid and/or
- algae powder (spirulina platensis, chlorella) and/or
- wild garlic powder (wild garlic leaf powder) and/or
- zinc gluconate and/or
- curcuma extract (with y cyclodextrin) and/or
- steviol glycoside and/or
- selenium-enriched yeast and/or
- apple fiber and/or
- ginger extract powder and/or
- chromium picolinate and/or
- sodium molybdate (*2H₂O).

## Revendications

1. Préparation de complément alimentaire qui se présente en particulier sous forme de poudre et/ou comme concentrat, comprenant :
- une composante de biodisponibilité destinée à augmenter la biodisponibilité de substances de complément alimentaire ou autres substances à effet physiologique spécifique à l'alimentation dans la préparation de complément alimentaire et
- une composante de chélateur destinée à assister la chélation dans le corps, **caractérisée en ce que**
la composante de biodisponibilité comprend un extrait de poivre noir, en particulier de biopérine, et une composante de gingembre, sachant que la composante de chélateur comprend une composante de spirulina et une composante de chlorella, une composante de curcuma et une composante d'ail des ours.

2. Préparation de complément alimentaire selon la revendication 1,
**caractérisée par** :
- une composante de tractus gastro-intestinal destinée à assister l'excrétion de substances de dégradation via les selles, et/ou
- une composante de rein destinée à assister l'élimination de substances de dégradation en particulier hydrosolubles, en particulier de toxines, dans le rein, et/ou
- une composante de foie destinée à assister la métabolisation de toxines en particulier liposolubles dans le foie.

3. Préparation de complément alimentaire selon la revendication 2,
**caractérisée en ce que**
la composante de tractus gastro-intestinal comprend une composante de brocoli et/ou une composante d'artichaut.

4. Préparation de complément alimentaire selon l'une des revendications 2 ou 3,
**caractérisée en ce que**
la composante de rein comprend une composante d'ortie.

5. Préparation de complément alimentaire selon l'une des revendications 2 à 4,
**caractérisée en ce que**
la composante de foie comprend une composante de silibinine, de préférence une composante de silymarine, en particulier une composante de chardon-marie argenté, et/ou une composante d'artichaut et/ou une composante de choline.

6. Préparation de complément alimentaire selon l'une des revendications précédentes,
**caractérisée par** :
une composante de zinc et/ou une composante de chrome et/ou une composante de molybdène et/ou une composante de sélénium.

7. Préparation de complément alimentaire selon l'une des revendications précédentes,
**caractérisée par** :
- du son de riz et/ou
- de la gomme de guar et/ou
- de l'extrait d'ortie (contenant de la maltodextrine, le cas échéant), et/ou
- de la poudre de brocoli et/ou
- de la choline (du bitartrate de choline) et/ou
- de la poudre d'artichaut (contenant de la maltodextrine, le cas échéant), et/ou
- de l'extrait de chardon argenté (contenant de la maltodextrine, le cas échéant), et/ou
- de l'acide citrique et/ou
- de la poudre d'algue (spirulina platensis, chlorella) et/ou
- de la poudre d'ail des ours (de la poudre de feuille d'ail des ours) et/ou
- du gluconate de zinc et/ou
- de l'extrait de curcuma (contenant de la γ-cyclodextrine) et/ou
- du glycoside de stéviol et/ou
- de la levure enrichie au sélénium et/ou
- de la fibre de pomme et/ou
- de la poudre d'extrait de gingembre et/ou
- du picolinate de chrome et/ou
- du molybdate de sodium (*2H₂O).
